# EUROPÄISCHE PATENTSCHRIFT

(11) **EP 3 015 929 B1**
(45) Veröffentlichungstag und Bekanntmachung des Hinweises auf die Patenterteilung: **03.01.2018**
(21) Anmeldenummer: 14191423.4
(22) Anmeldetag: 03.11.2014
(51) Int. Cl.: G05B 19/042, G05B 19/406

(54) **Standby-Steuerung für Werkzeugmaschinen**
Standby control for machine tools
Commande de veille pour machines-outils

(43) Veröffentlichungstag der Anmeldung: 04.05.2016
(73) Patentinhaber: Mikron Agie Charmilles AG, 2560 Nidau (CH)
(72) Erfinder: Besuchet, Jean-Philippe, 2000 Neuchatel (CH); Monsch, Michael, 3270 Aarberg (CH); Künzi, Micha, 2560 Nidau (CH)
(74) Vertreter: Fenner, Seraina

(56) Entgegenhaltungen:
- EP-A1- 2 620 819
- DE-A1-102011 122 515
- DE-A1-102013 200 595

## Beschreibung

Die vorliegende Erfindung betrifft eine Standby-Steuerung für Werkzeugmaschinen gemäss dem Oberbegriff des unabhängigen Patentanspruches 1 und eine entsprechend ausgestattete Werkzeugmaschinensteuerung oder Werkzeugmaschine gemäss Patentanspruch 13.

Es ist bekannt Werkzeugmaschinen mit Standby-Steuerungen auszustatten, welche den Energieverbrauch der Werkzeugmaschine regeln. Mit den bekannten Standby-Modi werden verschiedene Bestandteile einer Werkzeugmaschine (Antriebe, Steuerung, Kühlung, Hydraulik etc.) gemeinsam bei Nichtbetrieb der Werkzeugmaschine und oft nach einer gewissen Zeit in einen Schlafmodus versetzt, dies mit dem Ziel Energie zu sparen.
Die Patentschrift EP 2 149 828 B1 beschreibt einen mehrstufigen Abschaltmechanismus für Maschinen zwecks Reduktion des Energieverbrauches. Demgemäss kennt die Maschine die Zustände: "Aus", "Sleep-Mode" (nur eine übergeordnete Steuerung wird mit Strom versorgt), "Stand by" (eine Spannung liegt an Steuerung für Antriebe, Lampe etc. an, z.B. 24 V), "Fertigungsbereitschaft" (an allen fertigungsrelevanten Komponenten, wie Antriebe und Nebenaggregate liegt Leistung an, z.B. 380 V), "Fertigung" (die Antriebe beziehen die für den Bearbeitungsprozess notwendige Energie, Nebenaggregate laufen kontinuierlich). Wird eine Maschine oder Anlage gemäss der Patentschrift EP 2 149 828 B1 nicht benutzt, so wechselt diese zunächst auf "Fertigungsbereitschaft", nach einer bestimmbaren Zeit dann auf "Stand by" und schliesslich nach einer weiteren definierbaren Zeitspanne automatisch auf "Sleep-Mode" und letztlich schaltet sie sich vollständig aus. Gemäss der genannten Patentschrift lässt sich der Energieverbrauch der Maschine um ca. 30% reduzieren. Die offengelegte Vorrichtung umfasst hierbei auch die Möglichkeit die Maschine aus einem Energiesparmodus zurück in einen Betriebsmodus zu überführen bei Vorliegen eines entsprechenden Aktivierungsereignisses (z.B. Eingabe eines Benutzers). Hierbei findet eine entsprechende Aktivierungsvorschrift Anwendung. Während sich die Lehre dieser Schrift auf das automatisierte Deaktivieren der Maschinenbestandteile fokussiert, um einen tiefen Energieverbrauch zu erreichen, wird der Reaktivierung der Maschine und deren Einflüsse auf die Maschine keine Rechnung getragen.

Weitere Optimierungen des Energieverbrauchs mittels Steuerungen sind aus DE 10 2013 200 595 A1, DE 10 2011 122 515 A1 und EO 2 620 819 A1 zu entnehmen.

Bisherige Standby-Steuerungen funktionieren zwar gut, erlauben jedoch nur die Werkzeugmaschine in einen maximalen Standby-Modus zu versetzen. Dies ist einerseits sehr energiesparend, erhöht jedoch die Aufwärmzeit bzw. verschlechtert die Bearbeitungsgenauigkeit der Werkzeugmaschine zu Beginn der erneuten Betriebsaufnahme. Grund hierfür ist, dass die Erwärmung bzw. Wärmedehnung der Maschinenkomponenten einen grossen Einfluss auf die Bearbeitungsgenauigkeit der Werkzeugmaschine besitzt. Insbesondere bei den heutigen hohen Präzisions und Produktivitätsanforderungen an moderne Werkzeugmaschinen (z.B. Fräsmaschinen, CNC-Bearbeitungszentren) spielt ein schnelles Erreichen der optimalen Betriebstemperatur - bei welcher die geforderte hohe Bearbeitungspräzision erreicht wird - eine grosse Rolle. Heutige Standby-Steuerungen für Werkzeugmaschinen tragen diesem Umstand keine Rechnung.

Der vorliegenden Erfindung liegt daher die Aufgabe zugrunde eine erweiterte Standby-Steuerung für Werkzeugmaschinen zu bieten, welcher der Wiederinbetriebnahme der Maschine aus einem Standby-Modus Rechnung trägt.

Diese Aufgabe wird durch die Merkmale der Standby-Steuerung gemäss Anspruch 1 gelöst.

Die erfindungsgemässe Standby-Steuerung für Werkzeugmaschinen zum Regulieren des Energieverbrauchs von einer oder mehrerer energieverbrauchenden Komponenten einer Werkzeugmaschine während des Nichtbetriebes der Werkzeugmaschine lässt sich insbesondere dadurch charakterisieren, dass diese anhand eines vorgebbaren Eingabewertes EW, vorzugsweise in Form eines graphischen Schiebereglers auf einem Eingabebildschirm der Werkzeugmaschine oder in Form diskreter Werte, die energieverbrauchenden Komponenten einzeln aktivieren oder deaktivieren kann, so dass die Temperatur dieser einzelnen Komponenten und/oder der Werkzeugmaschine während des Nichtbetriebes der Werkzeugmaschine beeinflusst wird.

Dank der erfindungsgemässen Standby-Steuerung ist es nun möglich eine Werkzeugmaschine wie bisher energiesparend zu betreiben und zusätzlich die Bearbeitungsgenauigkeit bei unmittelbarer Inbetriebnahme der Werkzeugmaschine aus dem Standby-Modus vorzuggeben. Der wesentliche Vorteil gegenüber bisher bekannten Standby-Lösungen: Die Werkzeugmaschine wird nach einem Betriebsstillstand nicht schrittweise bis zu einem maximalen Standby-Modus runtergefahren, ohne Berücksichtigung des thermischen Maschinenzustandes bei Wiederinbetriebnahme der Werkzeugmaschine. Sondern es werden gemäss Erfindung einzelne energieverbrauchende Komponenten der Werkzeugmaschine nur so weit deaktiviert bzw. ausgeschaltet, dass sich die Temperatur dieser einzelnen Komponenten und/oder letztlich der Werkzeugmaschine nur soweit reduziert, dass bei unmittelbaren (Wieder-)Inbetriebnahme der Werkzeugmaschine aus dem Stand-by-Modus die gewünschte bzw. vorgegebene Bearbeitungsgenauigkeit sofort erreicht wird bzw. unmittelbar abgerufen werden kann. Hierdurch wird die Produktivität der Werkzeugmaschine spürbar erhöht: Eine Aufwärmzeit der Werkzeugmaschine, während welcher keine Produkte oder nur Ausschuss hergestellt werden kann, entfällt. Dies ist im Gegensatz zu den bekannten Lösungen des Standes der Technik, welche sich auf einen schrittweisen Ausschaltvorgang der Maschine oder nur auf eine Maximierung der Energieersparnis fokussieren und der Wiederinbetriebnahme der Werkzeugmaschine keine Beachtung schenken.
Gemäss der Erfindung kann der Benutzer einen Eingabewert EW vorgeben, z.B. in Form eines visualisierten Schiebereglers auf einem Touch-Screen-Bildschirm der Werkzeugmaschinenbedienung. Mit diesem Eingabewert EW wird vom Benutzer der Standby-Steuerung die gewünschte Bearbeitungsgenauigkeit der Werkzeugmaschine unmittelbar bei Wiederinbetriebnahme der Werkzeugmaschine aus dem Standby-Modus vorgeben. D.h. diese gewünschte Bearbeitungsgenauigkeit der Werkzeugmaschine ist jederzeit abrufbar, egal ob sich die Werkzeugmaschine nur ein paar Stunden oder gar ein paar Tage im Standby-Modus befindet bzw. nicht in Betrieb ist.

Natürlich ist die erfindungsgemässe Betriebsweise der Werkzeugmaschine nicht immer optimal energiesparend. Dies trifft insbesondere dann zu, wenn die Stand-by-Steuerung der Werkzeugmaschine auf sofortige, unmittelbare Abrufbereitschaft der höchsten Bearbeitungsgenauigkeit eingestellt ist. Bei einer solchen Einstellung, können einige der energieverbrauchenden Komponenten nicht komplett über eine längere Zeit ausgeschaltet bzw. deaktiviert bleiben, sondern müssen nach einer Weile von der Standby-Steuerung wieder aktiviert werden, so dass die Temperatur dieser einzelnen Komponenten und/oder die Temperatur der Werkzeugmaschine nicht unter einem Wert fällt, welcher die Präzision der Werkzeugmaschine (d.h. deren Bearbeitungsgenauigkeit) verschlechtert. Ein solcher Standby-Betrieb schmälert zwar die Energieersparnis, erlaubt dennoch eine gewisse Energieersparnis gegenüber einer Werkzeugmaschine in ständiger Betriebsbereitschaft. Zudem kann eine solche Einstellung der Standby-Steuerung monetär betrachtet noch höhere Ersparnisse in der Produktivität bewirken, da eine unproduktive Aufwärmphase entfällt. Z.B. muss für Werkstücke mit hoher Präzisionsanforderungen kein zeitraubendes Aufwärmprogramm an einer Werkzeugmaschine gefahren werden etc.
Die erfindungsgemässe Standby-Steuerung für Werkzeugmaschinen weist in einer bevorzugten Variante verschiedene Sensoren auf, welche die Temperatur der Werkzeugmaschine an einer oder an mehreren Stellen misst. Die Vorrichtung kann auch die Temperatur einzelner energieverbrauchenden Komponenten messen. Oder die Standby-Steuerung berechnet anhand eines hinterlegten mathematischen Modelles und der verstrichenen Zeit seit dem letzten Maschinenstillstand, der letzten Werkzeugbearbeitung (Zeitdauer, Belastung z.B. durch Messung der Maschinenleistung) etc., eventuell auch kombiniert mit einer oder einzelnen repräsentativen Temperaturmessungen an der Werkzeugmaschine (z.B. Temperatur der Werkzeugtisches oder Maschinenkopf), die zu erwartende aktuelle Bearbeitungsgenauigkeit der Werkzeugmaschine bei unmittelbarer Inbetriebnahme. Die Standby-Steuerung ist daher erfindungsgemäss nicht nur befähigt einzelne energieverbrauchende - und Abwärme oder allgemein Wärme erzeugende - Komponenten zu deaktivieren, sondern auch in der Lage derartige Komponenten nach Bedarf zu aktivieren, so dass diese einen direkten oder indirekten thermischen Einfluss auf die Werkzeugmaschine haben. Die Standby-Steuerung kann diese Komponenten daher während des Standby-Modus nach Bedarf aktivieren und deaktivieren, um den gewünschten thermischen Einfluss auf die Werkzeugmaschine zu erreichen bzw. die gewünschte Bearbeitungsgenauigkeit zu halten oder wieder zu erreichen.
Die Komponenten können wie eben erwähnt einen direkten oder indirekten thermischen Einfluss auf die Werkzeugmaschine haben. Z.B. kann der Betrieb eines Kühlkreislaufes mittels Kühlpumpe während des Standby-Modus bewirken, dass eine gleichmässige Temperaturverteilung im Bauteil (z.B. Motorspindel) beibehalten wird oder dass die durch die Pumpleistung der Pumpe erzeugte Abwärme das Bauteil auf eine gewisse Temperatur hält. Die zeitweise Aktivierung eines Gebläses innerhalb der Werkzeugmaschine kann andererseits einen indirekten thermischen Einfluss besitzen, indem es eine gleichmässige Temperaturverteilung der angeblasenen Maschinenbauteile bewirkt.
Unter Aktivierung einer Komponente (z.B. ein elektrischer Motor) kann auch verstanden werden, dass deren Antriebselektronik mit der Steuerspannung versorgt wird (z.B. 24 V) oder dass an der Komponente bzw. dessen Steuerung die Betriebsspannung anliegt (z.B. 380 V) und die Komponente damit eigentlich leistungsbereit wäre. In beiden genannten Fällen bewirkt bereits das Anlegen der Spannung an die Steuerung oder an die Antriebselektronik der Komponente, dass Abwärme entsteht und sich diese Komponente - wie deren Umgebung - bis zu einem gewissen Grad aufwärmt, auch wenn diese Komponente nicht in Betrieb ist (d.h. z.B. der elektrischer Motor dreht nicht).
Die Erfindung beinhaltet aber auch die Möglichkeit, dass ausschliesslich zur Wärmeerzeugung gedachte Elemente (z.B. Heizwicklungen oder Heizelemente) an den einzelnen Komponenten oder an bestimmten Stellen der Werkzeugmaschine angebraucht sind, welche der thermischen Stabilisierung bestimmter Maschinenbereiche (z.B. Motorspindel, Lagerschlitten etc.) dienen. Eine durchaus sinnvolle und umsetzbare Ausführungsform dieser Möglichkeit: Der Kühlmitteltank beinhaltet Heizelemente, welche von der Standby-Steuerung angesteuert werden und dafür Sorge tragen, dass das Kühlmittel auf eine bestimmte Temperatur gehalten oder zu einem vorbestimmten Zeitpunkt auf eine bestimmte Temperatur gebracht wird. Auf diese Weise kann verhindert werden, dass zum Beispiel das Kühlmittel eines 600 I fassenden Kühlmitteltankes an einer Werkzeugmaschine während eines Wochenendes auf 18 Grad Raumtemperatur runterkühlt und bei Inbetriebnahme der Werkzeugmaschine - welche auf 24 Grad temperiert wäre - am Montagmorgen das Werkstück und weitere Maschinenbauteile mit dem weiterhin 18 Grad kalten Kühlmittel beaufschlagt und dadurch lokal runterkühlt werden (was die Bearbeitungsgenauigkeit natürlich negativ beeinflusst). Gerade dank der erfindungsgemässen Standby-Steuerung kann sichergestellt werden, dass das Kühlmittel im Kühlmitteltank eine gewünschte Temperatur beibehält oder auf einen bestimmbaren Zeitpunkt hin (z.B. Montagmorgen, 6 Uhr) diese Temperatur wieder erreicht.
Unter Aktivierung einer Komponente ist daher insbesondere das Erzeugen oder Verteilen von Wärme oder Abwärme zur thermischen Stabilisierung zu verstehen. Die erfindungsgemässe Standby-Steuerung muss natürlich auch in der Lage sein, diese Komponenten nicht nur zu aktivieren, sondern zu gegebener Zeit auch zu deaktivieren, ansonsten sich bestimmte Maschinenkomponenten oder -bereiche möglicherweise übermässig erwärmen würden. Die Standby-Steuerung regelt daher zwecks gewünschter thermischen Stabilisierung der Werkzeugmaschine das Aktivieren und wie auch das Deaktivieren dieser Komponenten.

Die Erfindung bietet zudem weitere Funktionalitäten und Varianten an. So kann z.B. mittels einer Timerfunktion vorgesehen sein, dass man der Standby-Steuerung den geplanten Zeitpunkt für die Inbetriebnahme der Werkzeugmaschine (z.B. Uhrzeit) vorgibt. Auf diese Weise kann die Maschine zwischenzeitlich - z.B. über Nacht oder am Wochenende - maximal heruntergefahren werden und wobei die Standby-Steuerung dann die Komponenten der Werkzeugmaschine frühzeitig wieder aktiviert, so dass zum festgelegten Zeitpunkt die Werkzeugmaschine und ihre Komponenten eine Temperatur oder Zustand aufweisen, welche der gewünschten Bearbeitungsgenauigkeit der Maschine entspricht und entsprechend sofort einsatzbereit ist. Weitere Funktionalitäten und vorteilhafte Ausgestaltungen der Erfindung sind in den abhängigen Ansprüchen zu finden oder werden im Folgenden weiter erläutert.

Die erfindungsgemässe Standby-Steuerung für Werkzeugmaschinen dient zum Regulieren des Energieverbrauchs einzelner energieverbrauchenden Komponenten. Der Standby-Steuerung wird hierzu ein vorgebbarer Eingabewertes EW vorgegeben. Dies kann an der Bedienoberfläche bzw. Bedienpanel der Werkzeugmaschine geschehen, z.B. kann EW die Form eines graphischen Schiebereglers aufweisen. Basierend auf diesen vorgegebenen Eingabewert EW, regelt die Standby-Steuerung die energieverbrauchenden Komponenten einzeln in dem sie diese - während des Standby-Modus bzw. Nichtbetrieb der Maschine - aktiviert oder deaktiviert. Dadurch wird die Temperatur der einzelnen Komponenten und/oder der Werkzeugmaschine während des Nichtbetriebes der Werkzeugmaschine geregelt. Dadurch dass der thermische Zustand der Werkzeugmaschine bzw. von bestimmten Werkzeugmaschinenbereichen durch die Aktivierung und Deaktivierung bestimmter Komponenten geregelt wird, ist es möglich die gewünschte - durch EW bestimmte - Bearbeitungsgenauigkeit bei Inbetriebnahme zu bestimmen und sicherzustellen.

Beispielsweise können mindestens eine der folgenden Komponenten von der Standby-Steuerung während des Nichtbetriebes der Werkzeugmaschine bzw. im Standby-Modus für den erfindungsgemässen Zweck aktiviert oder deaktiviert werden:
- Antriebe oder Antriebselektronik des Werkstücktisches
- Antriebe oder Antriebselektronik des Werkzeugkopfes
- Hydraulik, Hydraulikpumpe oder deren Antriebselektronik
- Pneumatik, Pneumatikpumpe oder deren Antriebselektronik
- Beleuchtungen im Arbeitsraum der Werkzeugmaschine
- Kühlkreislauf oder deren Antriebselektronik für Motorspindel im Werkzeugkopf oder für weitere Antriebe in der Werkzeugmaschine
- Kühlkreislauf oder deren Antriebselektronik für Steuerungsmodul
- Zentralschmierpumpe oder deren Antriebselektronik
- Spindelschmierpumpe oder deren Antriebselektronik
- Absaugung für Staub, Späne, oder Oelnebel im Arbeitsraum der Werkzeugmaschine
- Vorrichtung zum Spänemanagement
- Schmiervorrichtungen
- Druckluftzufuhr
- Heizelement in einer Werkzeugmaschinenkomponente, bevorzugt im Kühlmitteltank des Kühlmittels zur Temperierung vom Werkzeugmaschinenkomponenten, im Kühlmitteltank des Kühlmittels zur Temperierung der Bearbeitungsflüssigkeiten, am Werkzeugtisch, am Schlitten des Werkzeugtisches, im Werkzeugkopf oder an einem Antrieb, insbesondere in der Motorspindel des Werkzeugkopfes.

Dank des erfindungsgemäss vorgegebenen Eingabewertes EW an die Standby-Steuerung, ist die gewünschte Bearbeitungsgenauigkeit der Werkzeugmaschine jeweils sofort abrufbar. D.h. die Temperatur der Werkzeugmaschine oder der für die Bearbeitungsgenauigkeit wesentlichen Werkzeugmaschinenbereiche wird auf einem bestimmten (dem EW entsprechenden) Wert gehalten, so dass sich die thermische Dehnung bzw. Schrumpfung von Werkzeugmaschinenbereichen nach Produktions- bzw. Maschinenstillstand die Bearbeitungsgenauigkeit der Werkzeugmaschine nicht über den vorgegebenen Eingabewertes EW hinaus verschlechtern.
Dass die über den Wert EW vorgegebene Bearbeitungsgenauigkeit der Werkzeugmaschine jeweils sofort abrufbar ist bedeutet, dass diese Bearbeitungsgenauigkeit während des Standby-Modus bzw. Nichtbetriebes der Werkzeugmaschine nie unterschritten wird. Die Werkzeugmaschine kann daher jederzeit wieder in Betrieb genommen werden, wobei die Dauer des Nichtbetriebes keine Rolle spielt (d.h. ob es nur 5 Minuten, 2 Stunden oder 2 Tage sind).

In einer denkbaren Ausführungsform der Standby-Steuerung können für den Eingabewert EW mehrere diskrete Werte vorgegeben werden. Zum Beispiel kann vorgesehen sein, dass EW drei verschiedene Grössen annehmen kann. Eine Grösse - z.B. Akkurat genannt - kann für die Beibehaltung einer hohen Bearbeitungsgenauigkeit stehen, eine zweite Grösse - z.B. Normal genannt - kann für die die Beibehaltung einer mittleren Bearbeitungsgenauigkeit stehen und eine dritte Grösse - z.B. Eco genannt - kann für die Beibehaltung einer tiefen bzw. der Beibehaltung keiner Bearbeitungsgenauigkeit stehen. Es auch denkbar, dass EW nur zwei verschiedene Grössen annehmen kann, z.B. Akkurat und Eco oder Akkurat und Normal.
Stellt man den Eingabewert EW auf die erste Grösse "Akkurat" ein, so aktiviert oder deaktiviert die Stand-by-Steuerung während des Nichtbetriebes der Werkzeugmaschine einzelne Komponenten derart, dass bei Inbetriebnahme der Werkzeugmaschine diese jederzeit bereits mit der Bearbeitungsgenauigkeit Werkstücke bearbeiten kann, welcher der normaler Betriebstemperatur entspricht (d.h. hohe Genauigkeit).
Stellt man den Eingabewert EW auf die zweite Grösse "Normal" ein, so aktiviert oder deaktiviert die Stand-by-Steuerung während des Nichtbetriebes der Werkzeugmaschine einzelne Komponenten derart, dass bei jederzeitiger Inbetriebnahme der Werkzeugmaschine diese Werkstücke in einem betreffend Bearbeitungsgenauigkeit vorgebbaren Toleranzbereich bearbeiten kann, welcher aber noch nicht der Bearbeitungsgenauigkeit entsprecht wie sie bei normaler Betriebstemperatur erreicht wird.
Stellt man den Eingabewert EW auf die dritte Grösse "Eco" ein, so aktiviert oder deaktiviert die Stand-by-Steuerung während des Nichtbetriebes der Werkzeugmaschine einzelne Komponenten gar nicht oder nur sehr beschränkt, so dass bei Inbetriebnahme der Werkzeugmaschine diese Werkstücke mit einer Bearbeitungsgenauigkeit bearbeitet, die ausserhalb eines vorgegebenen Toleranzbereiches liegen. Bei dieser dritten Stufe ist es denkbar, dass die Standby-Steuerung die Komponenten gar nicht aktiviert - d.h. maximale Energieersparnis - oder nur solche aktiviert bzw. temperiert hält, welche eine sehr lange Aufwärmphase (z.B. Stunden) zur Folge hätten (z.B. nur das Kühlmittel wird mittels eines Heizelementes auf eine bestimmte Temperatur gehalten etc.).

In einer bevorzugten Variante weist die erfindungsgemässe Standby-Steuerung zusätzlich eine Timer-Funktion auf, so dass die gewünschte und über den Eingabewert EW vorgegebene Bearbeitungsgenauigkeit erst zu einem bestimmbaren, zukünftigen Zeitpunkt wieder abrufbar ist. Damit ist es möglich, dass eine Werkzeugmaschine z.B. über Nacht - aus energetischer Sicht - maximal heruntergefahren wird, die Standby-Steuerung einzelne Komponenten der Werkzeugmaschine jedoch so rechtzeitig vordem eingegebenen Zeitpunkt wieder aktiviert, dass die Werkzeugmaschine am eingegebenen Zeitpunkt, z.B. am nächsten Arbeitstag um 6 Uhr morgens, wieder soweit "warm" ist, dass die Werkzeugmaschine gemäss dem Eingabewert EW mit der gewünschten Bearbeitungsgenauigkeit zum eingegebenen Zeitpunkt in Betrieb genommen werden kann. Die Standby-Steuerung kann hierzu die Zeitdauer der notwendige Aufwärmphase für verschiedene die einzelne Komponenten der Werkzeugmaschine bzw. der wesentlichen Werkzeugmaschinenbereiche anhand berechnen. Besonders bevorzugt ist die Stand-by-Steuerung hierfür auch mit Temperatursensoren verbunden, welche die Temperatur an bestimmten Bereichen oder Komponenten der Werkzeugmaschine messen können. Hiermit kann die Standby-Steuerung den thermischen Zustand der Werkzeugmaschine und damit die geforderte Bearbeitungsgenauigkeit noch besser regeln.

Die Verwendung von Temperatursensoren ist insbesondere beim üblichen Betrieb der Standby-Steuerung von Vorteil: Da die erfindungsgemässe Steuerung die Temperatur einzelner Komponenten bzw. der Werkzeugmaschine dann für die vorgegebene Bearbeitungsgenauigkeit einfach halten muss, können diese Komponenten dank der Temperatursensoren wieder deaktiviert werden, sobald dessen gemessene Temperatur einen gewünschten Wert erreicht hat. Fällt die gemessene Temperatur der Komponente unter einen Schwellenwert (z.B. 1 bis 3 Grad unter dem gewünschten Wert), so aktiviert die Standby-Steuerung diese Komponente wieder etc. Eine Regelung mit Temperatursensoren ist daher genauer und effizienter als z.B. bei einer reinen Zeitsteuerung, welche die einzelnen Komponenten über eine berechnete Zeitdauer aktiviert und anschliessend wieder deaktiviert. Mittels der Zeitsteuerung bzw. der Timer-Funktion der Standby-Steuerung kann wie erwähnt der Zeitpunkt der geplanten Inbetriebnahme ZIB der Werkzeugmaschine vorgegeben werden. Bevorzugt wird dies über die Eingabe an der Bedienoberfläche der Werkzeugmaschine gemacht, besonders bevorzugt über eine Tastatur oder einem Touch-Screen. Die Zeitsteuerung kann damit einzelne energieverbrauchenden Komponenten vor der Inbetriebnahme aktivieren (und eventuell auch wieder deaktivieren), so dass zum Zeitpunkt der geplanten Inbetriebnahme ZIB die Temperatur der einzelnen Komponenten und/oder der Werkzeugmaschine bzw. der wesentlichen Werkzeugmaschinenbereiche der - gemäss vorgegebenen Eingabewert EW - gewünschten Bearbeitungsgenauigkeit der Werkzeugmaschine entsprechen.

Gemäss einer weiteren Ausführungsform der Erfindung ist es ebenfalls denkbar, dass die Standby-Steuerung zusätzlich ein Warmlaufprogramm für die Aktivierung einzelne Komponenten der Werkzeugmaschine umfasst. So könnte die Standby-Steuerung beispielsweise bestimmte bewegliche Teile der Werkzeugmaschine in Bewegung setzen. Z.B. könnten der Werkzeugtisch oder der Maschinenkopf kontrollierte, vorgegebene Bewegungen vollziehen oder die Motorspindel im Maschinenkopf wird in Betrieb bzw. Leerlauf gesetzt. Ein Warmlaufprogramm eignet sich besonders in Kombination mit der oben beschriebenen Timer-Funktion fürs Aufwärmen der Werkzeugmaschine auf einen bestimmten Zeitpunkt hin.

In der Standby-Steuerung kann in einer weiteren Variante der Erfindung auch der geplante Ausschaltzeitpunkt AZP der Werkzeugmaschine eingegeben sein. Bei Erreichen oder Überschreiten dieses Ausschaltzeitpunktes AZP wird die Werkzeugmaschine und ihre energieverbrauchenden Komponenten nach deren Betriebsstillstand auf ein Energieminimum deaktiviert bzw. wird in den Standby-Modus gefahren. Als Ausschaltzeitpunkt AZP kann zum Beispiel das Ende der letzten Arbeitsschicht eingegeben werden (z.B. 20 Uhr). Die Werkzeugmaschine, z.B. eine vollautomatische CNC-Maschine, bearbeitet dann ein eingespanntes Werkstück zu Ende (z.B. bis 21:30 Uhr) und deaktiviert sich dann von selbst bzw. fährt in den gewünschten Standby-Modus. Auch diese Variante mit geplantem Ausschaltzeitpunkt AZP lässt sich sehr gut mit der vorgehend beschriebenen Timer-Funktion kombinieren.

Es kann natürlich auch vorgesehen sein, dass die Werkzeugmaschine mittels manueller Eingabe durch das Bedienpersonal (z.B. Knopfdruck) in einen erfindungsgemässen Standby-Modus runterfährt, bei welchen die einzelnen energieverbrauchenden Komponenten deaktiviert werden. Dies kann quasi auf Knopfdruck sofort geschehen, wobei der Bearbeitungsprozess unterbrochen wird und die Werkzeugmaschine stillsteht oder sobald das eingespannte Werkstück zu Ende bearbeitet ist.

Es kann im Weiteren vorgesehen sein, dass die Werkzeugmaschine den Standby-Modus verlässt und die einzelnen energieverbrauchenden Komponenten aktiviert sobald eine manuelle Aktivierung erfolgt. Eine derartige manuelle Aktivierung kann durch einen Tastendruck an der Werkzeugmaschine oder seiner Bedienoberfläche oder z.B. durch die Entriegelung der Arbeitsraumtüre stattfinden.

In einer weiteren bevorzugten Ausführungsform besitzt die Standby-Steuerung oder die Maschinensteuerung eine eigene Anzeige, vorzugsweise am Monitor oder Touch-Screen der Werkzeugmaschine, auf welcher anhand der aktuellen - z.B. gemessenen - Temperatur der einzelnen Komponenten die aktuelle Bearbeitungsgenauigkeit der Werkzeugmaschine widergegeben bzw. visualisiert wird. Bevorzugt ist der angezeigte Wert der aktuellen Bearbeitungsgenauigkeit mit dem eingestellten Eingabewert EW der gewünschten Bearbeitungsgenauigkeit verknüpft. Zum Beispiel könnte die Anzeige für die Visualisierung der aktuelle Bearbeitungsgenauigkeit der Werkzeugmaschine zwei diskrete Werte annehmen, wobei der erste Wert angibt, dass die Werkzeugmaschine die gewünschten Bearbeitungsgenauigkeit gemäss vorgegebenen Eingabewert EW erreicht und der zweite Wert angibt, dass die Werkzeugmaschine die gewünschten Bearbeitungsgenauigkeit gemäss Eingabewert EW nicht erreicht.
Besonders bevorzugt werden diese zwei Werte in der Anzeige als Ampel visualisiert, welche eine grünen oder eine rote Farbe annehmen kann. Ist der angezeigte Wert grün, so bedeutet dies dass die Werkzeugmaschine in der vom Eingabewert EW vorgegebenen Bearbeitungsgenauigkeit sofort betrieben werden kann. Ist der angezeigte Wert rot, bedeutet dies dass die Werkzeugmaschine die geforderte Bearbeitungsgenauigkeit (noch) nicht erreicht. Der Maschinenbediener muss daher mit der Inbetriebnahme der Werkzeugmaschine noch zuwarten.

Die erfindungsgemässe Standby-Steuerung kann an beliebigen Werkzeugmaschinen eingesetzt werden, insbesondere an Fräs- oder Drehmaschinen, oder als zusätzliche Funktionalität in bekannten Werkzeugmaschinensteuerungen implementiert und eingesetzt werden.

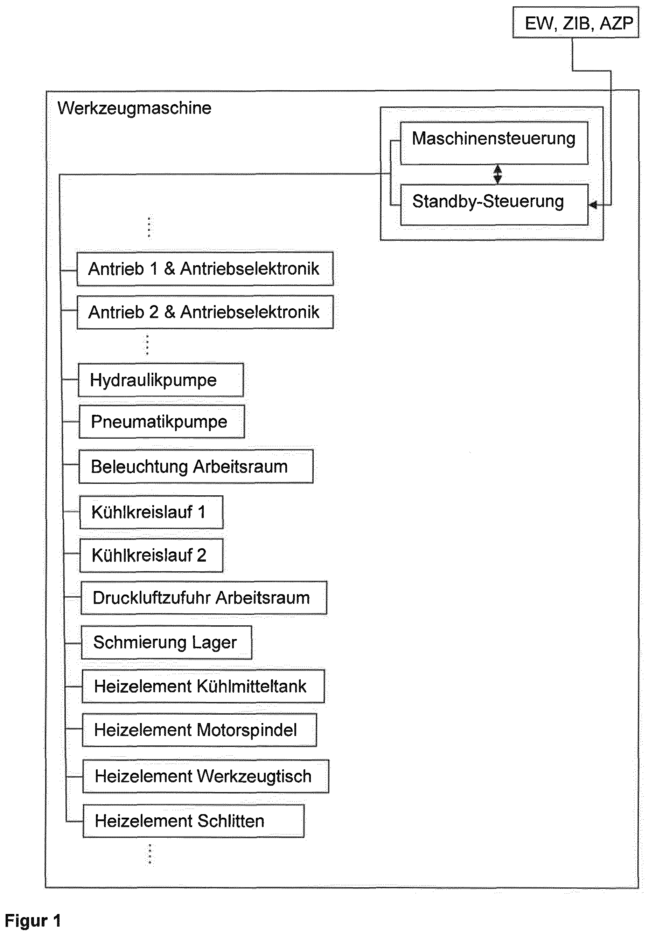

Die Figur 1 zeigt eine schematische Ansicht einer Werkzeugmaschine mit einer erfindungsgemässen Standby-Steuerung. Wie die Figur beispielhaft darstellt, ist die Standby-Steuerung Bestandteil des übergeordneten Steuerungssystems der Werkzeugmaschine. Es ist auch mit der üblichen Maschinensteuerung verknüpft. Wie die Illustration zeigt, kann die Standby-Steuerung mit zahlreichen bzw. einzelnen energieverbrauchenden Komponenten der Werkzeugmaschine verbunden sein. Diese energieverbrauchenden Komponenten sind bevorzugt Elemente/Baugruppen, deren Temperatur oder Aktivität - z.B. bei einem Gebläse - die Bearbeitungsgenauigkeit der Werkzeugmaschine spürbar bis wesentlich beeinflussen. Die erfindungsgemässe Standby-Steuerung aktiviert oder deaktiviert je nach Bedarf die dargestellten Komponenten einzeln. Somit kann sie den thermischen Zustand der Werkzeugmaschine bzw. der wesentlichen Werkzeugmaschinenbereiche während dem Nichtbetriebes der Werkzeugmaschine (bzw. wenn der Standby-Modus aktiv ist) beeinflussen und gewährleistet, dass die gewünschte - über den Eingabewert EW vorgebbare - Bearbeitungsgenauigkeit von der Werkzeugmaschine jederzeit oder - bei Vorhandensein der Timer-Funktion - zu einem gewissen Zeitpunkt unmittelbar abrufbereit ist.

Die vorliegende Erfindung ist nicht auf die explizit genannten Möglichkeiten und Ausführungsformen beschränkt. Diese Varianten sind vielmehr als Anregung für den Fachmann gedacht, um die Erfindungsidee möglichst günstig umzusetzen.

## Patentansprüche

1. Standby-Steuerung für Werkzeugmaschinen zum Regulieren des Energieverbrauchs von einer oder mehrerer energieverbrauchenden Komponenten einer Werkzeugmaschine während des Nichtbetriebes der Werkzeugmaschine, wobei
die Standby-Steuerung gemäss eines vorgebbaren Eingabewertes (EW), vorzugsweise in Form eines graphischen Schiebereglers der auf einem Eingabebildschirm der Werkzeugmaschine dargestellt ist, die energieverbrauchenden Komponenten einzeln aktivieren oder deaktivieren kann, so dass die Temperatur dieser einzelnen Komponenten und/oder der Werkzeugmaschine während des Nichtbetriebes der Werkzeugmaschine beeinflusst wird, **dadurch gekennzeichnet, dass**
der Eingabewert (EW) zwei unterschiedliche Grössen annehmen kann, wobei
- bei Vorgabe einer ersten Grösse, vorzugsweise Akkurat genannt, die Standby-Steuerung derart konfiguriert ist, während des Nichtbetriebes der Werkzeugmaschine deren einzelne Komponenten derart zu aktivieren oder zu deaktivieren, dass bei Inbetriebnahme der Werkzeugmaschine diese bereits mit der Bearbeitungsgenauigkeit Werkstücke bearbeiten kann wie bei normaler Betriebstemperatur
- bei Vorgabe einer zweiten Grösse, vorzugsweise Normal genannt, die Standby-Steuerung derart konfiguriert ist, während des Nichtbetriebes der Werkzeugmaschine deren einzelne Komponenten derart zu aktivieren oder zu deaktivieren, dass bei Inbetriebnahme der Werkzeugmaschine diese bereits Werkstücke mit einer Bearbeitungsgenauigkeit bearbeiten kann, welche innerhalb eines vorgebbaren Toleranzbereiches von der normalen Bearbeitungsgenauigkeit abweicht.

2. Standby-Steuerung für Werkzeugmaschinen gemäss Anspruch 1, **dadurch gekennzeichnet, dass** die Standby-Steuerung derart konfiguriert ist, dass mindestens eine der folgenden energieverbrauchenden Komponenten von der Standby-Steuerung aktiviert oder deaktiviert wird:
- Antriebe oder Antriebselektronik des Werkstücktisches
- Antriebe oder Antriebselektronik des Werkzeugkopfes
- Hydraulik, Hydraulikpumpe oder deren Antriebselektronik
- Pneumatik, Pneumatikpumpe oder deren Antriebselektronik
- Beleuchtungen im Arbeitsraum der Werkzeugmaschine
- Kühlkreislauf oder deren Antriebselektronik für Motorspindel im Werkzeugkopf oder weitere Antriebe in der Werkzeugmaschine
- Kühlkreislauf oder deren Antriebselektronik für Steuerungsmodul
- Zentralschmierpumpe oder deren Antriebselektronik
- Spindelschmierpumpe oder deren Antriebselektronik oder deren Luftzufuhr
- Absaugung für Staub, Späne, oder Ölnebel im Arbeitsraum der Werkzeugmaschine
- Vorrichtung zum Spänemanagement
- Schmiervorrichtungen
- Druckluftzufuhr
- Heizelement in einer Werkzeugmaschinenkomponente, bevorzugt im Kühlmitteltank des Kühlmittels zur Temperierung vom Werkzeugmaschinenkomponenten, im Kühlmitteltank des Kühlmittels zur Temperierung der Bearbeitungsflüssigkeiten, am Werkzeugtisch, am Schlitten des Werkzeugtisches, im Werkzeugkopf oder an einem Antrieb, insbesondere in der Motorspindel des Werkzeugkopfes.

3. Standby-Steuerung für Werkzeugmaschinen gemäss Anspruch 1 oder 2, **dadurch gekennzeichnet, dass** der vorgebbare Eingabewert (EW) an die Standby-Steuerung der gewünschten Bearbeitungsgenauigkeit der Werkzeugmaschine bei Inbetriebnahme der Werkzeugmaschine entspricht.

4. Standby-Steuerung für Werkzeugmaschinen gemäss einem der vorangehenden Ansprüche, **dadurch gekennzeichnet, dass** der Eingabewert (EW) drei unterschiedliche Grösse annehmen kann, wobei
- bei Vorgabe der ersten Grösse, vorzugsweise Akkurat genannt, die Standby-Steuerung derart konfiguriert ist, während des Nichtbetriebes der Werkzeugmaschine deren einzelne Komponenten derart zu aktivieren oder zu deaktivieren, dass bei Inbetriebnahme der Werkzeugmaschine diese bereits mit der Bearbeitungsgenauigkeit Werkstücke bearbeiten kann wie bei normaler Betriebstemperatur
- bei Vorgabe der zweiten Grösse, vorzugsweise Normal genannt, die Standby-Steuerung derart konfiguriert ist, während des Nichtbetriebes der Werkzeugmaschine deren einzelne Komponenten derart zu aktivieren oder zu deaktivieren, dass bei Inbetriebnahme der Werkzeugmaschine diese bereits Werkstücke mit einer Bearbeitungsgenauigkeit bearbeiten kann, welche innerhalb eines vorgebbaren Toleranzbereiches von der normalen Bearbeitungsgenauigkeit abweicht
- bei Vorgabe einer dritten Grösse, vorzugsweise Eco genannt, die Standby-Steuerung derart konfiguriert ist, während des Nichtbetriebes der Werkzeugmaschine deren einzelne Komponenten derart zu aktivieren oder zu deaktivieren, dass bei Inbetriebnahme der Werkzeugmaschine diese bereits Werkstücke mit einer Bearbeitungsgenauigkeit bearbeiten kann, welche jedoch ausserhalb des vorgebbaren Toleranzbereiches von der normalen Bearbeitungsgenauigkeit liegt.

5. Standby-Steuerung für Werkzeugmaschinen gemäss einem der vorangehenden Ansprüche, **dadurch gekennzeichnet, dass** die Standby-Steuerung ein Warmlaufprogramm für die Aktivierung einzelne Komponenten der Werkzeugmaschine umfasst.

6. Standby-Steuerung für Werkzeugmaschinen gemäss einem der vorangehenden Ansprüche, **dadurch gekennzeichnet, dass** die Standby-Steuerung eine Zeitsteuerung mitumfasst, mit welcher der Zeitpunkt der geplanten Inbetriebnahme (ZIB) der Werkzeugmaschine vorgegeben kann, bevorzugt über die Eingabe an einer Bedienoberfläche der Werkzeugmaschine, besonders bevorzugt über eine Tastatur oder einem Touch-Screen, und die Zeitsteuerung die energieverbrauchenden Komponenten einzeln vor der Inbetriebnahme aktivieren oder deaktivieren kann, so dass zum Zeitpunkt der geplanten Inbetriebnahme (ZIB) die Temperatur der einzelnen Komponenten und/oder der Werkzeugmaschine der, gemäss vorgegebenen Eingabewert (EW), gewünschten Bearbeitungsgenauigkeit der Werkzeugmaschine entspricht.

7. Standby-Steuerung für Werkzeugmaschinen gemäss dem vorangehenden Anspruch 6, **dadurch gekennzeichnet, dass** die Standby-Steuerung derart konfiguriert ist, dass in der Zeitsteuerung auch der geplante Ausschaltzeitpunkt (AZP) der Werkzeugmaschine umfasst ist und bei Erreichen oder Überschreiten dieses Ausschaltzeitpunktes (AZP) die Werkzeugmaschine und ihre energieverbrauchenden Komponenten nach deren Betriebsstillstand auf einen vorgegebenen Energiesparmodus gemäss Eingabewert (EW) deaktiviert werden.

8. Standby-Steuerung für Werkzeugmaschinen gemäss einem der vorangehenden Ansprüche, **dadurch gekennzeichnet**, dassdie Standby-Steuerung derart konfiguriert ist, dass die Werkzeugmaschine mittels manueller Eingabe durch das Bedienpersonal in einen Standby-Modus runterfährt bei welchem die einzelnen energieverbrauchenden Komponenten gestaffelt deaktiviert werden sobald die Werkzeugmaschine stillsteht.

9. Standby-Steuerung für Werkzeugmaschinen gemäss einem der vorangehenden Ansprüche, **dadurch gekennzeichnet, dass** die Standby-Steuerung derart konfiguriert ist, dass bei Betriebsunterbruch der Werkzeugmaschine aufgrund einer Fehlermeldung oder Defektes, die Werkzeugmaschine nicht in einen Standby-Modus fährt und die energieverbrauchenden Komponenten aktiviert bleiben.

10. Standby-Steuerung für Werkzeugmaschinen gemäss einem der vorangehenden Ansprüche, **dadurch gekennzeichnet, dass** die Standby-Steuerung derart konfiguriert ist, dass die Werkzeugmaschine den Standby-Modus verlässt und die einzelnen energieverbrauchenden Komponenten aktiviert sobald eine manuelle Aktivierung erfolgt, bevorzugt erfolgt die manuelle Aktivierung durch einen Tastendruck an der Werkzeugmaschine oder seiner Bedienoberfläche oder durch die Entriegelung der Arbeitsraumtüre.

11. Standby-Steuerung für Werkzeugmaschinen gemäss einem der vorangehenden Ansprüche, **dadurch gekennzeichnet, dass** die Standby-Steuerung eine Anzeige besitzt, vorzugsweise an einem Monitor oder Touch-Screen der Werkzeugmaschine, auf welcher anhand der Temperatur der einzelnen Komponenten und/oder der Umgebungstemperatur der Werkzeugmaschine die aktuelle Bearbeitungsgenauigkeit der Werkzeugmaschine widergegeben wird, bevorzugt ist der angezeigte Wert der aktuellen Bearbeitungsgenauigkeit an den eingestellten Eingabewert (EW) der gewünschten Bearbeitungsgenauigkeit geknüpft.

12. Standby-Steuerung für Werkzeugmaschinen gemäss Anspruch 11, **dadurch gekennzeichnet, dass** die Standby-Steuerung derart konfiguriert ist, dass die Anzeige für die aktuelle Bearbeitungsgenauigkeit der Werkzeugmaschine zwei diskrete Werte annimmt, wobei der erste Wert angibt, dass die Werkzeugmaschine die gewünschten Bearbeitungsgenauigkeit gemäss Eingabewert (EW) erreicht
und der zweite Wert angibt, dass die Werkzeugmaschine die gewünschten Bearbeitungsgenauigkeit gemäss Eingabewert (EW) nicht erreicht, besonders bevorzugt ist die Anzeige als Ampel visualisiert, welche eine grünen oder eine rote Farbe annehmen kann.

13. Werkzeugmaschinensteuerung oder Werkzeugmaschine, insbesondere Fräsmaschine, Elektroerosionsmaschine oder Laserbearbeitungsmaschine, beinhaltende eine Standby-Steuerung gemäss einem der vorangehenden Ansprüche.

## Claims

1. Standby control for machine tools, for regulating the energy consumption of one or more energy-consuming components of a machine tool during nonoperation of the machine tool, wherein
the standby control can individually activate or deactivate the energy-consuming components according to a predeterminable input value (EW), preferably in the form of a graphical slide control which is represented on an input screen of the machine tool, so that the temperature of these individual components and/or of the machine tool is influenced during nonoperation of the machine tool, **characterized in that**
the input value (EW) can have two different values, wherein
- when a first value is specified, preferably referred to as accurate, the standby control is configured to, during nonoperation of the machine tool activate or deactivate its individual components in such a way that, when the machine tool is started up, it can already process workpieces with the processing accuracy as at the normal operating temperature
- when a second value is specified, preferably referred to as normal, the standby control is configured to, during nonoperation of the machine tool activate or deactivate its individual components in such a way that, when the machine tool is started up, it can already process workpieces with a processing accuracy which deviates from the normal processing accuracy within a predeterminable tolerance range.

2. Standby control for machine tools according to Claim 1, **characterized in that** the standby control is configured such that at least one of the following energy-consuming components is activated or deactivated by the standby control:
- drives or drive electronics of the workpiece table
- drives or drive electronics of the tool head
- hydraulics, hydraulic pump or drive electronics thereof
- pneumatics, pneumatic pump or drive electronics thereof
- illuminations in the working room of the machine tool
- cooling circuit or drive electronics thereof for motor spindle in the tool head or further drives in the machine tool
- cooling circuit or drive electronics thereof for control module
- central lubricant pump or drive electronics thereof
- spindle lubricant pump or drive electronics thereof or air supply thereof
- suction for dust, swarf or oil mist in the working room of the machine tool
- device for swarf management
- lubricating devices
- compressed air supply
- heating element in a machine tool component, preferably in the coolant tank of the coolant for thermally regulating machine tool components, in the coolant tank of the coolant for thermally regulating the working fluids, on the tool table, on carriages of the tool table, in the tool head or in a drive, particularly in the motor spindle of the tool head.

3. Standby control for machine tools according to Claim 1 or 2, **characterized in that** the predeterminable input value (EW) on the standby control corresponds to the desired processing accuracy of the machine tool when starting up the machine tool.

4. Standby control for machine tools according to one of the preceding claims, **characterized in that** the input value (EW) can have three different values, wherein
- when the first value is specified, preferably referred to as accurate, the standby control is configured to, during nonoperation of the machine tool activate or deactivate its individual components in such a way that, when the machine tool is started up, it can already process workpieces with the processing accuracy as at the normal operating temperature
- when the second value is specified, preferably referred to as normal, the standby control is configured to, during nonoperation of the machine tool activate or deactivate its individual components in such a way that, when the machine tool is started up, it can already process workpieces with a processing accuracy which deviates from the normal processing accuracy within a predeterminable tolerance range
- when a third value is specified, preferably referred to as eco, during nonoperation of the machine tool the standby control is configured to activate or deactivate its individual components in such a way that, when the machine tool is started up, it can already process workpieces with a processing accuracy which, however, lies outside the predeterminable tolerance range from the normal processing accuracy.

5. Standby control for machine tools according to one of the preceding claims, **characterized in that** the standby control comprises a warm-up programme for the activation of individual components of the machine tool.

6. Standby control for machine tools according to one of the preceding claims, **characterized in that** the standby control also comprises a time control with which the time (ZIB) of the planned start-up of the machine tool can be specified, preferably via input on a user interface of the machine tool, particularly preferably via a keypad or a touchscreen, and the time control can individually activate or deactivate the energy-consuming components before the start-up, so that at the time (ZIB) of the planned start-up the temperature of the individual components and/or of the machine tool corresponds to the processing accuracy of the machine tool desired according to the predetermined input value (EW).

7. Standby control for machine tools according to the preceding Claim 6, **characterized in that** the standby control is configured such that the time control also comprises the planned switch-off time (AZP) of the machine tool and, when this switch-off time (AZP) is reached or passed, the machine tool and its energy-consuming components are deactivated after they have ceased operation into a predetermined energy-saving mode according to the input value (EW).

8. Standby control for machine tools according to one of the preceding claims, **characterized in that** the standby control is configured such that the machine tool is reduced by means of manual input by the operating personnel to a standby mode in which the individual energy-consuming components are deactivated in a staggered fashion as soon as the machine tool is at rest.

9. Standby control for machine tools according to one of the preceding claims, **characterized in that** the standby control is configured such that in the event of an operational interruption of the machine tool due to an error message or defect, the machine tool does not enter a standby mode and the energy-consuming components remain activated.

10. Standby control for machine tools according to one of the preceding claims, **characterized in that** the standby control is configured such that the machine tool leaves the standby mode and the individual energy-consuming components are activated as soon as manual activation is carried out, the manual activation preferably being carried out by pressing a button on the machine tool or its user interface or by unlocking the working room doors.

11. Standby control for machine tools according to one of the preceding claims, **characterized in that** the standby control has a display, preferably on a monitor or touchscreen of the machine tool, on which the current processing accuracy of the machine tool is indicated with the aid of the temperature of the individual components and/or the ambient temperature of the machine tool, the displayed value of the current processing accuracy preferably being linked with the adjusted input value (EW) of the desired processing accuracy.

12. Standby control for machine tools according to Claim 11, **characterized in that** the standby control is configured such that the display for the current processing accuracy of the machine tool has two discrete values, the first value indicating that the machine tool achieves the desired processing accuracy according to the input value (EW) and the second value indicating that the machine tool does not achieve the desired processing accuracy according to the input value (EW), the display particularly preferably being visualised as a lamp which can have a green or red colour.

13. Machine tool control or machine tool, in particular milling machine, spark erosion machine or laser processing machine, containing a standby control according to one of the preceding claims.

## Revendications

1. Commande de veille pour machines-outils destinée à réguler la consommation d'énergie d'un ou de plusieurs composants consommateurs d'énergie d'une machine-outil pendant le non-fonctionnement de la machine-outil, dans laquelle
la commande de veille peut activer ou désactiver individuellement les composants consommateurs d'énergie conformément à une valeur d'entrée pouvant être prédéterminée (EW), de préférence sous la forme d'un curseur graphique qui est représenté sur un écran de saisie de la machine-outil, de manière à agir sur la température desdits composants individuels et/ou de la machine-outil pendant le non-fonctionnement de la machine-outil, **caractérisée en ce que**
la valeur d'entrée (EW) peut présenter deux grandeurs différentes, dans laquelle
- lors de la spécification d'une première grandeur, de préférence appelée Précise, la commande de veille est configurée de manière à ce que, pendant le non-fonctionnement de la machine-outil, ses composants individuels soient activés ou désactivés afin que, lors de la mise en marche de la machine-outil, celle-ci puisse déjà traiter des pièces à usiner avec la même précision d'usinage que dans le cas d'une température de fonctionnement normale,
- lors de la spécification d'une deuxième grandeur, de préférence appelée Normale, la commande de veille est configurée de manière à ce que, pendant le non-fonctionnement de la machine-outil, ses composants individuels soient activés ou désactivés afin que, lors de la mise en marche de la machine-outil, celle-ci puisse déjà traiter des pièces à usiner avec une précision d'usinage qui s'écarte de la précision d'usinage normale à l'intérieur d'une plage de tolérance pouvant être prédéterminée.

2. Commande de veille pour machines-outils selon la revendication 1, **caractérisée en ce que** la commande de veille est configurée de manière à ce qu'au moins l'un des composants consommateurs d'énergie suivants soit activé ou désactivé par la commande de veille :
- des mécanismes d'entraînement ou une électronique de commande de la table porte-pièces,
- des mécanismes d'entraînement ou une électronique de commande de la tête d'outil,
- un système hydraulique, une pompe hydraulique ou son électronique de commande,
- un système pneumatique, une pompe pneumatique ou son électronique de commande,
- des éclairages dans l'espace de travail de la machine-outil,
- un circuit de refroidissement ou son électronique de commande destinée à la broche moteur dans la tête d'outil ou d'autres mécanismes d'entraînement dans la machine-outil,
- un circuit de refroidissement ou son électronique de commande destinée au module de commande,
- une pompe de lubrification centralisée ou son électronique de commande,
- une pompe de lubrification de broche ou son électronique de commande ou son admission d'air,
- un dispositif d'aspiration de poussière, de copeaux, ou de brouillards d'huile dans l'espace de travail de la machine-outil,
- un dispositif de gestion des copeaux,
- des dispositifs de lubrification,
- une admission d'air comprimé,
- un élément chauffant dans un composant de machine-outil, de préférence dans le réservoir de liquide de refroidissement destiné au liquide de refroidissement pour réguler la température des composants de machine-outil, dans le réservoir de liquide de refroidissement destiné au liquide de refroidissement pour réguler la température des liquides d'usinage, sur la table porte-outils, sur le chariot de la table porte-outils, dans la tête d'outil ou sur un mécanisme d'entraînement, notamment dans la broche moteur de la tête d'outil.

3. Commande de veille pour machines-outils selon la revendication 1 ou 2, **caractérisée en ce que** la valeur d'entrée pouvant être prédéterminée (EW) sur la commande de veille correspond à la précision d'usinage souhaitée de la machine-outil lors de la mise en marche de la machine-outil.

4. Commande de veille pour machines-outils selon l'une quelconque revendications précédentes, **caractérisée en ce que** la valeur d'entrée (EW) peut présenter trois grandeurs différentes, dans laquelle
- lors de la spécification de la première grandeur, de préférence appelée Précise, la commande de veille est configurée de manière à ce que, pendant le non-fonctionnement de la machine-outil, ses composants individuels soient activés ou désactivés afin que, lors de la mise en marche de la machine-outil, celle-ci puisse déjà traiter des pièces à usiner avec la même précision d'usinage que dans le cas d'une température de fonctionnement normale,
- lors de la spécification de la deuxième grandeur, de préférence appelée Normale, la commande de veille est configurée de manière à ce que, pendant le non-fonctionnement de la machine-outil, ses composants individuels soient activés ou désactivés afin que, lors de la mise en marche de la machine-outil, celle-ci puisse déjà traiter des pièces à usiner avec une précision d'usinage qui s'écarte de la précision d'usinage normale à l'intérieur d'une plage de tolérance pouvant être prédéterminée,
- lors de la spécification d'une troisième grandeur, de préférence appelée Eco, la commande de veille est configurée de manière à ce que, pendant le non-fonctionnement de la machine-outil, ses composants individuels soient activés ou désactivés afin que, lors de la mise en marche de la machine-outil, celle-ci puisse déjà traiter des pièces à usiner avec une précision d'usinage qui se situe cependant à l'extérieur d'une plage de tolérance pouvant être prédéterminée de la précision d'usinage normale.

5. Commande de veille pour machines-outils selon l'une quelconque revendications précédentes, **caractérisée en ce que** la commande de veille comprend un programme de préchauffage destiné à l'activation de composants individuels de la machine-outil.

6. Commande de veille pour machines-outils selon l'une quelconque revendications précédentes, **caractérisée en ce que** la commande de veille comporte une commande temporelle au moyen de laquelle l'instant planifié de la mise en marche (ZIB) de la machine-outil peut être prédéterminé, de préférence par saisie sur une surface de commande de la machine-outil, et plus préférablement par l'intermédiaire d'un clavier ou d'un écran tactile, et **en ce que** la commande temporelle peut activer ou désactiver individuellement les composants consommateurs d'énergie avant la mise en marche, de manière à ce qu'à l'instant planifié de la mise en marche (ZIB), la température des composants individuels et/ou de la machine-outil corresponde à la précision d'usinage souhaitée de la machine-outil conformément à valeur d'entrée prédéterminée (EW).

7. Commande de veille pour machines-outils selon la revendication 6 précédente, **caractérisée en ce que** la commande de veille est configurée de manière à ce que l'instant de désactivation planifié (AZP) de la machine-outil soit également compris dans la commande temporelle et **en ce que**, lorsque cet instant de désactivation (AZP) est atteint ou dépassé, la machine-outil et ses composants consommateurs d'énergie soient désactivés après l'arrêt de son fonctionnement pour passer dans un mode d'économie d'énergie prédéterminé conformément à la valeur d'entrée (EW).

8. Commande de veille pour machines-outils selon l'une quelconque revendications précédentes, **caractérisée en ce que** la commande de veille est configurée de manière à ce que la machine-outil soit ramenée par le personnel de service, par saisie manuelle, dans un mode de veille lors duquel les composants individuels consommateurs d'énergie sont désactivés de manière échelonnée dès que la machine-outil s'arrête.

9. Commande de veille pour machines-outils selon l'une quelconque revendications précédentes, **caractérisée en ce que** la commande de veille est configurée de manière à ce que, lors de l'interruption du fonctionnement de la machine-outil due à un message d'erreur ou à un défaut, la machine-outil ne passe pas dans un mode de veille et les composants consommateurs d'énergie restent activés.

10. Commande de veille pour machines-outils selon l'une quelconque revendications précédentes, **caractérisée en ce que** la commande de veille est configurée de manière à ce que la machine-outil sorte du mode de veille et active les composants individuels consommateurs d'énergie dès qu'une activation manuelle est effectuée, l'activation manuelle étant de préférence effectuée par appui sur une touche présente sur la machine-outil ou sur sa surface de commande ou par déverrouillage de la porte de l'espace de travail.

11. Commande de veille pour machines-outils selon l'une quelconque revendications précédentes, **caractérisée en ce que** la commande de veille possède un affichage, de préférence sur un écran ou un écran tactile de la machine-outil, sur lequel est représentée la précision d'usinage actuelle de la machine-outil sur la base de la température des composants individuels et/ou de la température ambiante de la machine-outil, la valeur affichée de la précision d'usinage actuelle étant de préférence conditionnée à la valeur d'entrée réglée (EW) de la précision d'usinage souhaitée.

12. Commande de veille pour machines-outils selon la revendication 11, **caractérisée en ce que** la commande de veille est configurée de manière à ce que l'affichage de la précision d'usinage actuelle de la machine-outil adopte deux valeurs discrètes, dans laquelle la première valeur indique que la machine-outil atteint la précision d'usinage souhaitée conformément à la valeur d'entrée (EW)
et la deuxième valeur indique que la machine-outil n'atteint pas la précision d'usinage souhaitée conformément à la valeur d'entrée (EW), l'affichage étant plus préférablement visualisé sous la forme d'un feu de signalisation qui peut présenter une couleur verte ou rouge.

13. Commande de machine-outil ou machine-outil, notamment une fraiseuse, une machine d'électroérosion ou une machine d'usinage au laser, comportant une commande de veille selon l'une quelconque des revendications précédentes.
